# EUROPEAN PATENT APPLICATION

(11) **EP 2 982 592 A1**
(43) Date of publication of application: **10.02.2016**
(21) Application number: 15157686.5
(22) Date of filing: 05.03.2015
(51) Int. Cl.: B62M 6/55, B62M 11/02

(54) **Powertrain device for electric bicycle**

(30) Priority: 08.08.2014 KR 20140102559; 21.10.2014 KR 20140142584
(71) Applicant: Samsung Electro-Mechanics Co., Ltd., Gyeonggi-do (KR)
(72) Inventor: Oh, Myung Geun, Gyeonggi-Do (KR); Kim, Se Joo, Gyeonggi-Do (KR); Yun, Tae Ho, Gyeonggi-Do (KR)
(74) Representative: Grünecker Patent- und Rechtsanwälte PartG mbB

(57) **Abstract**

A powertrain device for an electric bicycle (10), including a first follower gear (120) receiving power transmitted from a rotation shaft (12A) of a driving motor (12), a first drive gear (130) engaged with the first follower gear (120) and receiving power transmitted from the first follower gear (120), a second follower gear (140) installed on a first gear shaft (131) on which the first drive gear (130) is installed, a second drive gear (160) engaged with the second follower gear (140) and receiving power transmitted from the second follower gear (140), a third follower gear (170) installed on a second gear shaft (161) on which the second drive gear (160) installed thereon, a third drive gear (180) engaged with the third follower gear (170), receiving power, and installed on a pedal shaft (13), and a ratchet guide (240) and additional bearings minimizing torsion load applied to a ratchet (190) disposed between the third drive gear (180) and the pedal shaft (13).

## Description

### CROSS-REFERENCE TO RELATED APPLICATIONS

This application claims the priority and benefit of Korean Patent Application No. 10-2014-0102559 filed on August 8, 2014 and 10-2014-0142584 filed on October 21, 2014, with the Korean Intellectual Property Office, the disclosures of which are incorporated herein by reference.

### BACKGROUND

The present inventive concept relates to a powertrain device for an electric bicycle.

A bicycle is configured in such a manner that a front wheel, provided as a steering wheel, and a rear wheel, provided as a driving wheel, are arranged in a straight line at the front and back of a bicycle frame, respectively, and the bicycle moves forward when a rider applies pressure to pedals, linked to the rear wheel, to rotate the rear wheel. Such a bicycle is installed with a powertrain device such as a chain, a gearbox, or the like, for transmitting power generated from the pedals to the rear wheel.

According to the configuration, when the rider applies pressure to the pedals, a driving sprocket which is attached to cranks to which the pedals are attached is rotated, and accordingly, the rear wheel, linked to a driven sprocket is simultaneously rotated by a chain to move the bicycle.

The bicycle is driven by force generated by pedaling of a user. Here, although there may be little difficulty in riding a bicycle on flat ground, a great deal of physical effort may be required when riding a bicycle on sloping ground, such as on hills and the like.

To address this issue, recently, electric bicycles, including motors installed therein, driven by driving force of the motor in addition to pedaling force of a user have become available. Such electric bicycles are configured to use a motor driven by a battery and driving modes in which a bicycle is ridden using only pedaling force of a user, ridden only using force of the motor driven by the battery, or ridden using both pedaling force of the user and the driving force of the motor may be selected.

### [Related Art Document]

### [Patent Document]

Korean Patent Laid-Open Publication No.2012-0132593

### SUMMARY

An aspect of the present inventive concept may provide a powertrain device for an electric bicycle, for minimizing torsion load applied to a ratchet provided in the powertrain device for the electric bicycle to transmit force in a single direction among components of the powertrain device for the electric bicycle.

According to an aspect of the present inventive concept, a powertrain device for an electric bicycle may include a first follower gear receiving power transmitted from a rotation shaft of a driving motor, a first drive gear engaged with the first follower gear and receiving power transmitted from the first follower gear, a second follower gear installed on a first gear shaft on which the first drive gear is installed, a second drive gear engaged with the second follower gear and receiving power transmitted from the second follower gear, a third follower gear installed on a second gear shaft on which the second drive gear is installed, a third drive gear engaged with the third follower gear, receiving power transmitted from the third follower gear, and installed on a pedal shaft, and a ratchet guide and additional bearings minimizing torsion load applied to a ratchet disposed between the third drive gear and the pedal shaft.

### BRIEF DESCRIPTION OF DRAWINGS

The above and other aspects, features and other advantages of the present inventive concept will be more clearly understood from the following detailed description taken in conjunction with the accompanying drawings, in which:
FIG. 1 is a view illustrating an example of an electric bicycle employing a powertrain device for an electric bicycle according to an exemplary embodiment of the present inventive concept;
FIG. 2 is a perspective view of a case for accommodating a powertrain device for an electric bicycle according to an exemplary embodiment of the present inventive concept;
FIG. 3 is a front perspective view of a powertrain device for an electric bicycle according to an exemplary embodiment of the present inventive concept;
FIG. 4 is a rear perspective view of a powertrain device for an electric bicycle according to an exemplary embodiment of the present inventive concept;
FIG. 5 is an exploded perspective view illustrating a structure in which a one-way clutch is installed in a powertrain device for an electric bicycle according to an exemplary embodiment of the present inventive concept;
FIG. 6 is a perspective view of a structure in which a ratchet is installed in a powertrain device for an electric bicycle according to an exemplary embodiment of the present inventive concept;
FIG. 7 is a perspective view of a ratchet in a powertrain device for an electric bicycle according to an exemplary embodiment of the present inventive concept; and
FIG. 8 is a cross-sectional view of the structure of FIG. 6 taken along line A-A'.

### DETAILED DESCRIPTION

Exemplary embodiments of the present inventive concept will now be described in detail with reference to the accompanying drawings.

The inventive concept may, however, be exemplified in many different forms and should not be construed as being limited to the specific embodiments set forth herein. Rather, these embodiments are provided so that this disclosure will be thorough and complete, and will fully convey the scope of the inventive concept to those skilled in the art.

In the drawings, the shapes and dimensions of elements may be exaggerated for clarity, and the same reference numerals will be used throughout to designate the same or like elements. In addition, it will be understood that the terms "first," "second," "one surface," "the other surface," and the like, may be used herein to distinguish one element from another element, and thus, the elements are not limited by these terms.

Descriptions of a related art that may unnecessarily obscure the essence of the present inventive concept will be omitted for increased clarity.

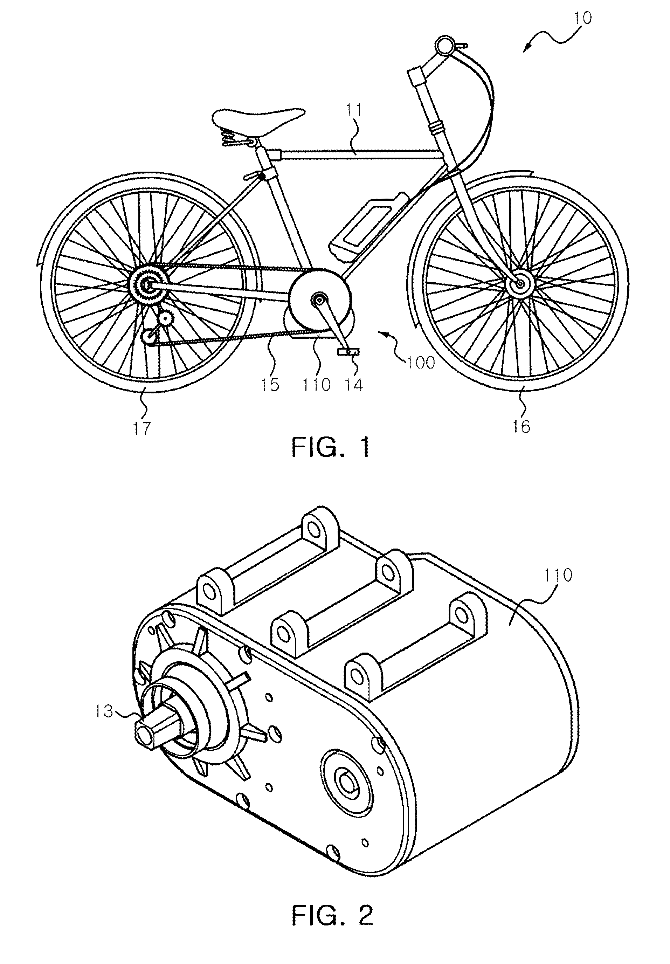

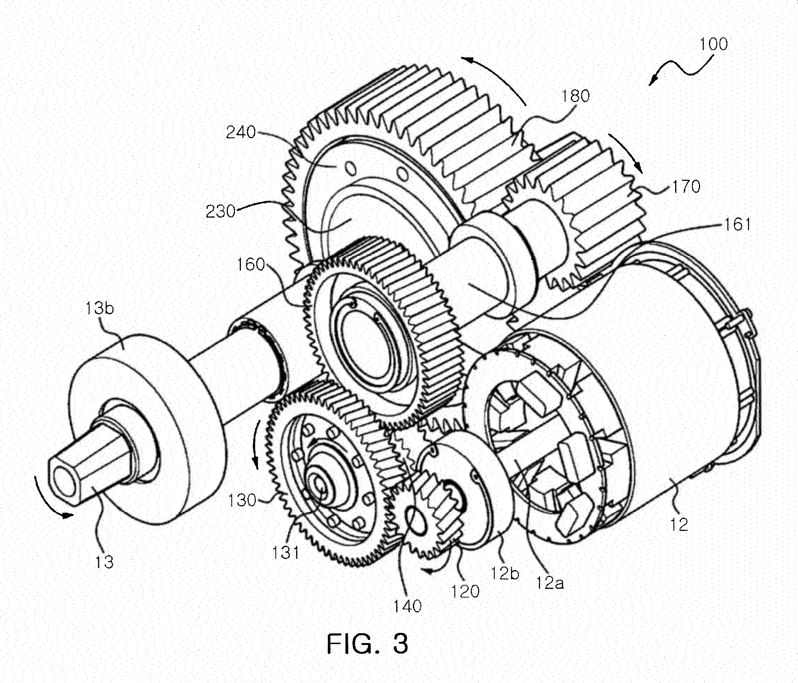

FIG. 1 is a view illustrating an example of an electric bicycle employing a powertrain device for an electric bicycle according to an exemplary embodiment of the present inventive concept; FIG. 2 is a perspective view of a case for accommodating a powertrain device for an electric bicycle according to an exemplary embodiment of the present inventive concept; and FIG. 3 is a front perspective view of a powertrain device for an electric bicycle according to an exemplary embodiment of the present inventive concept.

Referring to FIG. 1, an electric bicycle 10 may be configured in such a way that a front wheel 16 and a rear wheel 17 are supported by a frame 11 and a chain 15 rotated by pedal force of a pedal 14 or power transmitted from a driving motor 12 is engaged with and coupled to the rear wheel 17. Here, a powertrain element may include the pedal 14 and the driving motor 12. In this case, when force from a user is applied to the pedal 14, the pedal 14 may be rotated to transmit rotational force of the pedal 14 to the chain 15. In addition, when the driving motor 12 is connected to a power source unit for power to be supplied to the driving motor 12 therefrom, a rotation shaft 12a of the driving motor 12 may be rotated and may transmit rotational force of the rotation shaft 12a to the chain 15. In this case, when the user applies force to the pedal 14 to drive the electric bicycle 10, the driving motor 12 may assist the user to facilitate driving of the electric bicycle 10 on a hill, or the like, despite relatively low force from the user applied to the pedal 14.

Referring to FIG. 2, a powertrain device 100 for an electric bicycle according to an exemplary embodiment of the present inventive concept may further include a case 110 having an accommodation space formed therein for accommodating and protecting a portion or all of components of the powertrain device 100 for the electric bicycle. Hereinafter, the powertrain device 100 for the electric bicycle accommodated in the case 110 will be described with reference to FIGS. 3 through 8.

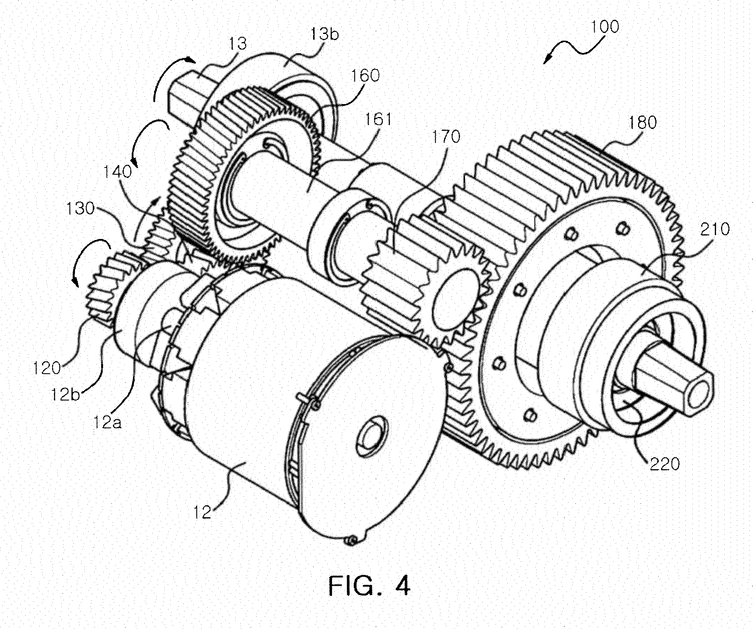

FIG. 3 is a front perspective view of a powertrain device for an electric bicycle according to an exemplary embodiment of the present inventive concept; and FIG. 4 is a rear perspective view of a powertrain device for an electric bicycle according to an exemplary embodiment of the present inventive concept.

Referring to FIGS. 3 and 4, the powertrain device 100 for the electric bicycle according to the exemplary embodiment of the present inventive concept may include a first follower gear 120, a first drive gear 130, a second follower gear 140, a second drive gear 160, a third follower gear 170, and a third drive gear 180. In addition, the powertrain device 100 for the electric bicycle according to the exemplary embodiment of the present inventive concept may further include a first powertrain element and a second powertrain element.

The first follower gear 120 may receive power transmitted from the rotation shaft 12a of the driving motor 12. Here, the first follower gear 120 may be installed on the rotation shaft 12a and may be rotated together with the rotation shaft 12a. In this case, the first follower gear 120 may be coupled to an end portion of the rotation shaft 12a.

In addition, the first follower gear 120 may be formed of, for example, a pinion.

A rotation shaft bearing 12b may be installed on the rotation shaft 12a and may support the rotation shaft 12a. Here, for example, the rotation shaft bearing 12b may have an outer circumferential surface fixed to the case and an inner circumferential surface of the rotation shaft bearing 12b installed on the rotation shaft 12a.

The first drive gear 130 may be engaged with and gear-coupled to the first follower gear 120 and may receive power transmitted from the first drive gear 130. For example, the first follower gear 120 and the first drive gear 130 may be gear-coupled to each other by a helical gear scheme or spur gear scheme.

Here, the first drive gear 130 may be disposed at one side of a first gear shaft 131 and may be rotated in conjunction with rotation of the first follower gear 120. In addition, the first drive gear 130 may be formed of a gearwheel.

The second follower gear 140 may be installed on the first gear shaft 131 on which the first drive gear 130 is installed and may be rotated together with the first gear shaft 131. Here, the second follower gear 140 may be disposed at the other side of the first gear shaft 131 and may be rotated in conjunction with the rotation of the first drive gear 130 to receive power transmitted from the first drive gear 130.

In addition, the second follower gear 140 may be formed of, for example, a pinion.

The second drive gear 160 may be engaged with and gear-coupled to the second follower gear 140 and may receive power transmitted from the second follower gear 140. For example, the second follower gear 140 and the second drive gear 160 may be gear-coupled to each other by a helical gear scheme or spur gear scheme.

Here, the second drive gear 160 may be disposed at one side of a second gear shaft 161 and may be rotated in conjunction with the rotation of the second follower gear 140. In addition, the second drive gear 160 may be formed of a gearwheel.

The third follower gear 170 may be installed on the second gear shaft 161 on which the second drive gear 160 is installed and may be rotated together with the second gear shaft 161. Here, the third follower gear 170 may be disposed at the other side of the second gear shaft 161 and may be rotated in conjunction with the rotation of the second drive gear 160 to receive power transmitted from the second drive gear 160.

In addition, the third follower gear 170 may be formed of, for example, a pinion.

The third drive gear 180 may be engaged with and gear-coupled to the third follower gear 170 and may receive power transmitted from the third drive gear 180. For example, the third follower gear 170 and the third drive gear 180 may be gear-coupled to each other by a helical gear scheme or spur gear scheme.

Here, the third drive gear 180 may be installed on a pedal shaft 13 and may be rotated in conjunction with the rotation of the third follower gear 170. In addition, the third drive gear 180 may be formed of a gearwheel.

A pedal shaft bearing 13b may be installed on the pedal shaft 13 and may support the pedal shaft 13. Here, for example, the pedal shaft bearing 13b may have an outer circumferential surface fixed to the case and an inner circumferential surface of the pedal shaft bearing 13b installed on the pedal shaft 13.

The first follower gear 120 and the first drive gear 130 may each be provided in a form of, for example, a helical gear to be engaged with each other. In addition, the first follower gear 120 may be formed to be smaller than the first drive gear 130. In this case, the first follower gear 120 may be formed to have the number of teeth provided therein less than a half of the number of teeth provided in the first drive gear 130. However, the number of teeth in the first follower gear 120 and the first drive gear 130 in the powertrain device for the electric bicycle according to the exemplary embodiment of the present inventive concept is not limited thereto.

The second follower gear 140 and the second drive gear 160 may each be formed in a form of, for example, a helical gear to be engaged with each other. In addition, the second follower gear 140 may be formed to be smaller than the second drive gear 160. In this case, the second follower gear 140 may be formed to have the number of teeth provided therein less than a half of the number of teeth provided in the second drive gear 160. However, the number of teeth in the second follower gear 140 and the second drive gear 160 in the powertrain device for the electric bicycle according to the exemplary embodiment of the present inventive concept is not limited thereto.

The third follower gear 170 and the third drive gear 180 may each be formed in a form of, for example, a spur gear to be engaged with each other. In addition, the third follower gear 170 may be formed to be smaller than the third drive gear 180. In this case, the third follower gear 170 may be formed to have the number of teeth provided therein less than a half of the number of teeth provided in the third drive gear 180. However, the number of teeth in the third follower gear 170 and the third drive gear 180 in the powertrain device for the electric bicycle according to the exemplary embodiment of the present inventive concept is not limited thereto.

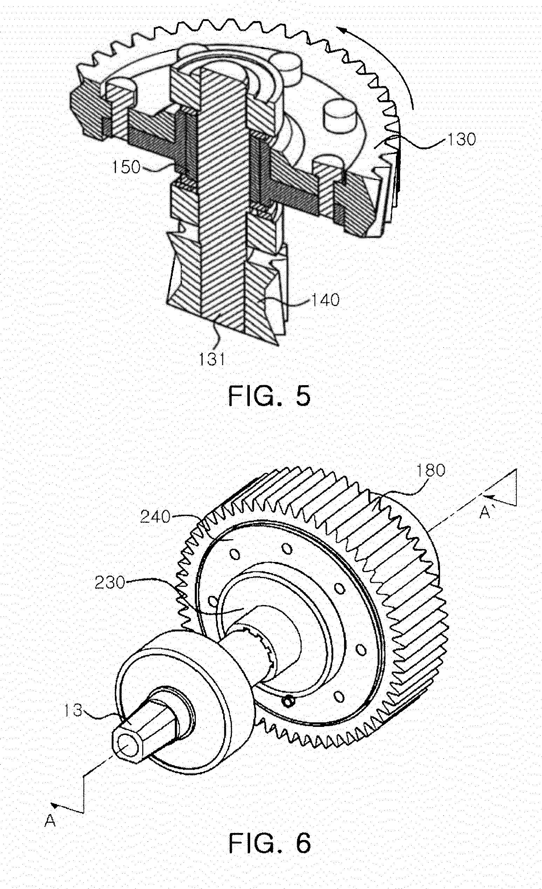

FIG. 5 is an exploded perspective view illustrating a structure in which a one-way clutch is installed in a powertrain device for an electric bicycle according to an exemplary embodiment of the present inventive concept.

Referring to FIG. 5, a first powertrain element may be disposed between the first drive gear 130 and the first gear shaft 131 and may transmit power in a single direction.

Here, the first powertrain element may include a one-way clutch 150 to only transmit power from the first drive gear 130 to the first gear shaft 131. In this case, the single direction may be a direction opposite to a rotation direction of the rotation shaft 12a of the driving motor 12. In addition, the single direction may be, for example, a counterclockwise direction. However, the single direction in the powertrain device 100 for the electric bicycle according to the exemplary embodiment of the present inventive concept is not limited to a counterclockwise direction.

The one-way clutch 150 may be formed of, for example, a cylindrical clutch.

Here, technique for transmitting power in a single direction using the one-way clutch 150 is known and thus a detailed description thereof will be omitted herein for conciseness.

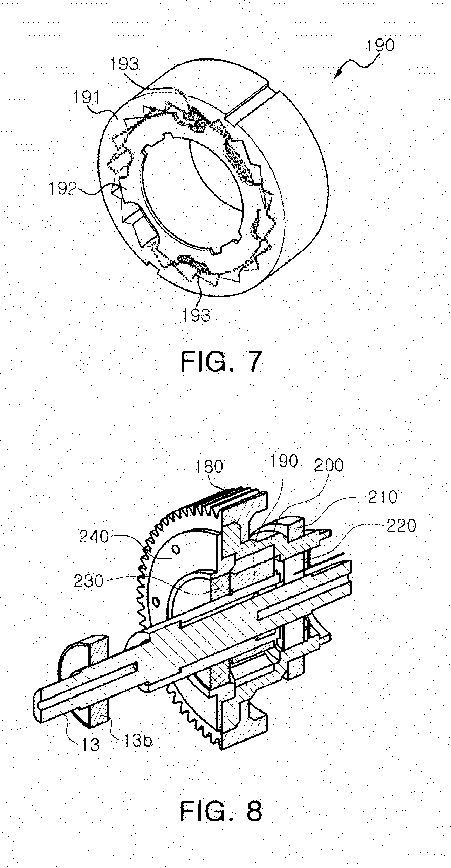

FIG. 6 is a perspective view of a structure in which a ratchet is installed in a powertrain device for an electric bicycle according to an exemplary embodiment of the present inventive concept; FIG. 7 is a perspective view of a ratchet in a powertrain device for an electric bicycle according to an exemplary embodiment of the present inventive concept; and FIG. 8 is a cross-sectional view of the structure of FIG. 6 taken along line A-A'.

Referring to FIGS. 6 through 8, a second powertrain element may be disposed between the third drive gear 180 and the pedal shaft 13 and may transmit power in a single direction therebetween.

Here, the second powertrain element may include a ratchet 190 to only transmit power from the third drive gear 180 to the pedal shaft 13. In this case, the ratchet 190 may be rotated together with the third drive gear 180, may transmit rotational force of the third drive gear 180 in one direction of rotation of the pedal shaft 13 to the pedal shaft 13, and may not transmit rotational force of the pedal shaft 13 in the other direction of rotation of the pedal shaft 13 to the third drive gear 180. That is, the ratchet 190 may transmit power during the rotation of the pedal shaft 13 in one direction thereof, and may run idle and may not transmit power during the rotation of the pedal shaft 13 in the other direction thereof. Thus, the ratchet 190 may rotate the chain 15 through the rotation of the pedal shaft 13 by pedaling force generated from a user operating the pedal 14, and may transmit power in a direction in which the front wheel 16 and the rear wheel 17 are rotated (refer to FIG. 1).

The ratchet 190 may include a support member 191 having an inner circumferential surface with protrusions formed thereon, a spring 192 disposed inwardly of the support member 191 and having an outer circumferential surface with protrusions formed thereon, and pawls 193 provided within the spring 192.

According to the exemplary embodiment of the present inventive concept, the powertrain device for the electric bicycle may further include a support member for reducing torsion load applied to the ratchet 190. The support member may be disposed at each of both sides of the ratchet 190 to prevent torsion load from being transmitted directly to the ratchet 190. The support member may include at least one of a holder 200, a first bearing 210, and a second bearing 220, which will be described hereinbelow.

The holder 200 supporting the ratchet 190 may be disposed between the ratchet 190 and the third drive gear 180. One end of the holder 200 may protrude outwardly of the third drive gear 180 along the pedal shaft 13 while the holder 200 surrounds the ratchet 190. The first bearing 210 may be disposed outwardly of an externally protruding portion of the holder 200, and the second bearing 220 may be disposed inwardly of the externally protruding portion of the holder 200 to be disposed between the holder 200 and the pedal shaft 13.

In addition, the holder 200 may further include a third bearing 230 between the pedal shaft 13 and the other end of the holder 200 opposite to one end of the holder 200. In this case, the other end of the holder 200 may be positioned between the third drive gear 180 and the pedal shaft 13. In addition, the holder 200 may further include a ratchet guide 240 disposed at the other end of the holder 200. In this case, the third bearing 230 may be disposed between the ratchet guide 240 and the pedal shaft 13.

The powertrain device 100 for the electric bicycle according to the exemplary embodiment of the present inventive concept configured as above may have a three-step speed reduction structure enabling the miniaturization and lightweight thereof, and may include bearings, for example, first, second, and third bearings, at both ends of the holder 200 to which relatively great torsion load is applied due to the inherent nature of the powertrain device 100 for the electric bicycle capable of reducing overall torsion load applied throughout the powertrain device 100 for the electric bicycle, for example, applied to the holder 200, the ratchet 190 inside the holder 200, the case 110, and the like, while enhancing supporting strength of the holder 200, thereby increasing lifespan of the powertrain device 100 for the electric bicycle.

As set forth above, according to exemplary embodiments of the present inventive concept, torsion load applied to the ratchet provided in the powertrain device for the electric bicycle to transmit force in a single direction among the components of the powertrain device for the electric bicycle may be minimized, whereby durability and reliability of the ratchet may be improved.

While exemplary embodiments have been shown and described above, it will be apparent to those skilled in the art that modifications and variations could be made without departing from the scope of the invention as defined by the appended claims.

## Claims

1. A powertrain device for an electric bicycle, comprising:
a first follower gear receiving power transmitted from a rotation shaft of a driving motor;
a first drive gear engaged with the first follower gear and receiving power transmitted from the first follower gear;
a second follower gear installed on a first gear shaft on which the first drive gear is installed;
a second drive gear engaged with the second follower gear and receiving power transmitted from the second follower gear;
a third follower gear installed on a second gear shaft on which the second drive gear is installed;
a third drive gear engaged with the third follower gear, receiving power transmitted from the third follower gear, and installed on a pedal shaft;
a ratchet disposed between the third drive gear and the pedal shaft; and
a support member reducing torsion load applied to the ratchet.

2. The powertrain device of claim 1, wherein the support member includes a holder disposed between the third drive gear and the ratchet.

3. The powertrain device of claim 2, wherein the support member includes a pair of bearings at both ends of the support member to be disposed between the pedal shaft and the holder while having the ratchet disposed between the pair of bearings.

4. The powertrain device of claim 3, wherein the support member includes a ratchet guide disposed between the holder and any one of the pair of bearings and transmitting force between the holder and the bearing.

5. The powertrain device of claim 1, further comprising a first powertrain element disposed between the first drive gear and the first gear shaft and only transmitting power from the first drive gear to the first gear shaft.

6. The powertrain device of claim 5, wherein the first powertrain element includes a one-way clutch.

7. The powertrain device of claim 1, wherein the ratchet only transmits power from the third drive gear to the pedal shaft.

8. The powertrain device of claim 1, wherein the first drive gear, the second drive gear, and the third drive gear are formed of a gearwheel.

9. The powertrain device of claim 1, wherein the first follower gear, the second follower gear, and the third follower gear are formed of a pinion.

10. The powertrain device of claim 1, wherein the first follower gear is installed on the rotation shaft and is rotated together with the rotation shaft.

11. The powertrain device of claim 1, wherein the first drive gear is installed on one side of the first gear shaft, the second follower gear is installed on the other side of the first gear shaft, such that the first drive gear and the second follower gear are rotated together with the first gear shaft.

12. The powertrain device of claim 1, wherein the second drive gear is installed on one side of the second gear shaft, the third follower gear is installed on the other side of the second gear shaft, such that the second drive gear and the third follower gear are rotated together with the second gear shaft.

13. The powertrain device of claim 1, wherein the first follower gear and the first drive gear are formed of a helical gear.

14. The powertrain device of claim 1, wherein the first follower gear, the second follower gear, and the third follower gear are formed to be smaller than the first drive gear, the second drive gear, and the third drive gear, respectively.

15. The powertrain device of claim 1, wherein the first follower gear, the second follower gear, and the third follower gear are formed to each have a number of teeth provided therein less than a half of a number of teeth of each of the first drive gear, the second drive gear, and the third drive gear.
